# EUROPEAN PATENT SPECIFICATION

(11) **EP 0 348 552 B1**
(45) Date of publication and mention of the grant of the patent: **26.05.1993**
(21) Application number: 88115000.7
(22) Date of filing: 14.09.1988
(51) Int. Cl.: B62B 1/12

(54) **Foldable cart for shopping**
Zusammenfaltbarer Handwagen zum Einkaufen
Chariot pliable pour faire ses emplettes

(30) Priority: 28.06.1988 ES 8802023
(43) Date of publication of application: 03.01.1990
(73) Proprietor: Server Perez, Juan, E-03750 Pedreguer Alicante (ES)
(72) Inventor: Server Perez, Juan, E-03750 Pedreguer Alicante (ES)
(74) Representative: Ungria Lopez, Javier

(56) References cited:
- FR-A- 1 488 011
- GB-A- 1 126 122
- GB-A- 1 145 447
- GB-A- 2 111 917
- US-A- 4 448 434

## Description

It is a foldable cart for shopping,of those having a wheeled framework to which the bottom of the bag is attached, which framework allows said wheels to be folded over the base, and the bag-framework assembly can be folded until forming a bag being seized by a part of the framework with which the cart is pulled in the unfolded position.

According to the prior art, the wheels are welded to corresponding frameworks, articulated to a resistant base situated beneath the bottom of the bag, said frameworks being folded.

In some cases, the bag handle is a doble one, formed by two "U"-tubes being parallelly displaced, which only aim is to be extended when the bag is pulled on fixed wheels or to withdraw in order to carry the bag hanging on the hand or on the arm. These cases correspond to non-foldable bags.

Different types of frameworks allow their folding, together with the bag and the wheels, in order to convert the assembly into a bag or reduced size and carry it hanging on until the moment when shopping is done, at which moment the wheels are extended and unfolded so that the loaded bag leans thereon and transport is easier.

The object of the invention is a foldable cart for buying, of the type of those being converted into a bag of reduced size, with the peculiarity that the bag and the wheels are automatically unfolded when one proceeds to extend both seizing frameworks, parallelly arranged, that it comprises.

With that aim, one of the frameworks has been provided with points of junction over the high part of the bag and the other with angular plates at its articulation ends on the resistant plate of the bottom of the bag, by which the wheels frameworks are forced to unfold and which are retained in this position until proceeding on the contrary, i.e., until proceeding to reduce the height of the seizing frameworks and to fold the bag and the resistant base.

At the side opposite that one whereto the seizing frameworks are articulated, the base is provided with two plates with notches for fitting under pressure against the frameworks, when the cart is folded.

There are, at the parallel sleeves which are crossed by the seizing frameworks, for their extension and folding, retaining means so as to avoid an untimely folding.

In a more improved embodiment of the invention, the retention means of the bag both in the folded and in the unfolded positions, can be improved without needing a great effort for changing position, being, however, sufficient to maintain the chosen position static.

In this regard, the prismatic piece of the lower ends of one of the parallelly displacing seizing frameworks has a second lug, parallel to the first one and with a higher flexibility index than this one, so that, while the latter carries out the unfolding of the wheel frameworks, the former fits in in the working position of the resistant base. The latter is provided with two wide paths whereinto the ends of said framework articulate, so that the second lug passes through a guiding space, touching one of the walls and being sufficiently away from the opposite wall as to provide with the necessary room for the lateral movement of said lug, which lug is provided, at the surface that touches said wall, with a step which acts as an anchoring means on the upper edge of said path.

The double tubular parallel sleeves are provided with a quadrangular passage of the same section as the sliding frameworks, thereby being able to eliminate lateral movements.

On the other hand, one of the sockets of each pair is provided with axial projections, coincident with each face or facet, having inner notches, provided with flexibility, in which notches the peripheral web of a ferrule provided at the end of the frame not attached to the resistant base engages in the extension position of the parallel frames. Just this peripheral web constitutes the means by which the resistant base disengages the retaining lug through its penetration between the two ones with which the terminal or prismatic piece that relates it to the other frame is provided.

For a better comprehension of the above description, the present specification has nine sheets of drawings attached thereto, wherein the cart assembly has been represented in different extension and folding positions, as well as details of the elements by which the extension and folding are attained.

### BRIEF DESCRIPTION OF THE DRAWINGS

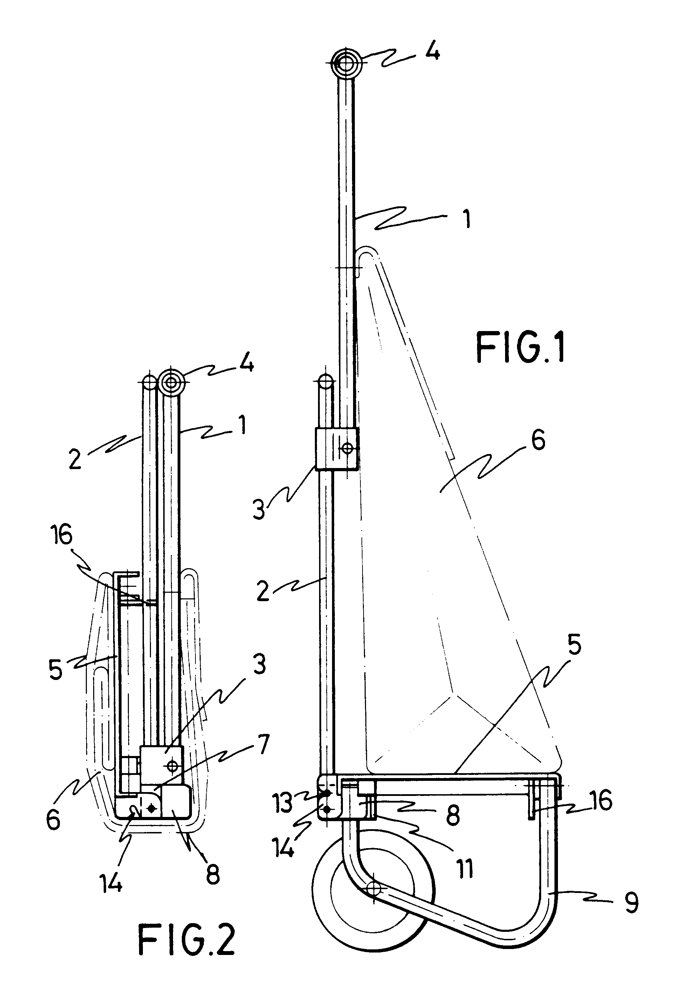

Figure 1.- It is a side elevational view with the framework and the bag unfolded in the position of use.

Figure 2.- It is a side view of the cart completely folded, in form of a bag.

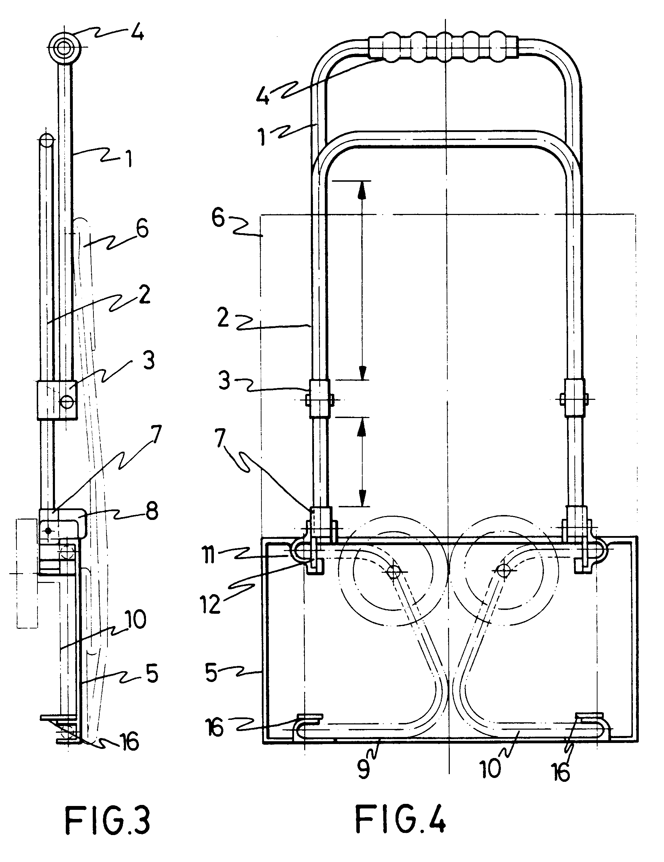

Figure 3.- It is a side elevational detail at the beginning of the folding operation.

Figure 4.- It is a front elevational view at the beginning of the folding operation or of the extension operation, indistinctly. Such as in the preceding figure really in an intermediate position both in the folding or in the extension.

Figure 5.- It is a perspective detail of the resistant base of the bag, from beneath, by the prismatic piece whereto the wheel frameworks are articulated, as well as the inner piece of the framework, which is taken apart.

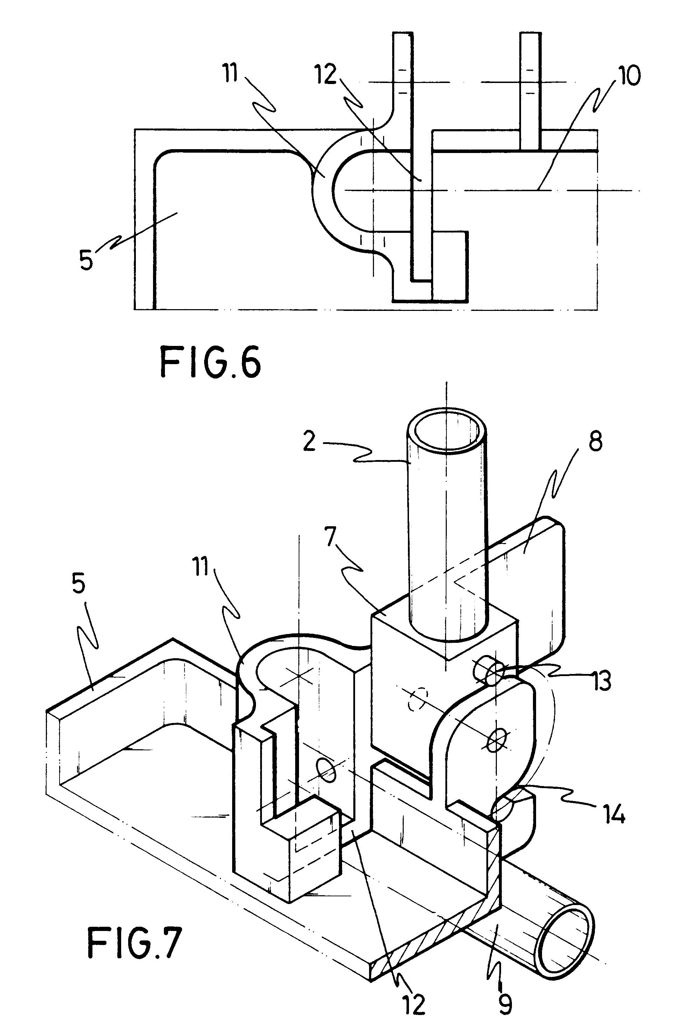

Figure 6.- It is a plan view of the detail itself of the articulation prismatic piece which forms part of the resistant base of the bag.

Figure 7.-It is the same perspective view as in Figure 5, wherein the lower piece of the framework is engaged in its articulation point, the lower piece and the framework carrying it being seen in a partial unfolded position. The wheel frame is folded in the resting position.

Figure 8.- It is a perspective view from the lower face, such as in the preceding figures, wherein the frame is unfolded and the lug of the lower piece has forced the wheel framework to be in the rolling position.

Figure 9.- It is a perspective view, also from beneath, wherein the frame is folded, the same as the wheel framework. This position corresponds to that of full folding in the form of a bag, such as represented in Figure 2.

Figure 10.- It represents three views of the prismatic piece of the lower ends of one of the seizing frameworks, according to other more improved embodiment.

Figure 11.- It shows the perspective of said prismatic piece according to Figure 10.

Figure 12.- It corresponds to the perspective view of the prismatic piece attached to the end of the framework, as well as the perspective of the zone of the rigid base which forms the framework of the bottom of the bag, wherein the prismatic piece articulation lodging is located, according to Figure 11.

Figure 13.- It represents a side elevational view of the prismatic piece according to Figure 10 attached to the framework, as well as the disposition in it of the tubular socket that joins them to the other displaceable framework, with their mutual fitting elements, in this improved way of embodiment.

Figure 14.- It is a plan view of the tubular socket according to the preceding figure.

Figure 15.- It is a perspective view of the tubular socket.

The elements constituting the cart for shopping have been numerically referenced for identification purposes.

Thus, there are two frames 1 and 2, parallel to each other, sliding the one with respect to the other, attached to each other by double tubular sleeves 3 fixedly engaged to the frame 1 that constitutes the seizing handle 4 and which are sliding on the frame 2 being attached by the lower part to the rigid base 5 of the bottom of the bag 6.

The frame 2 and the base 5 are joined to each other through the prismatic piece 7, which is provided with a lug 8 by means of which the extension of the wheel frameworks 9 and 10 is carried out, which wheels can be folded over the lower face of the rigid base 5.

The prismatic piece 7 is articulated to the housing 11 of the rigid base 5 and its lug, 8, in the frames extension and folding movement, passes inside the zone 12 of the housing in order to attack the wheel frameworks 9 and 10, respectively.

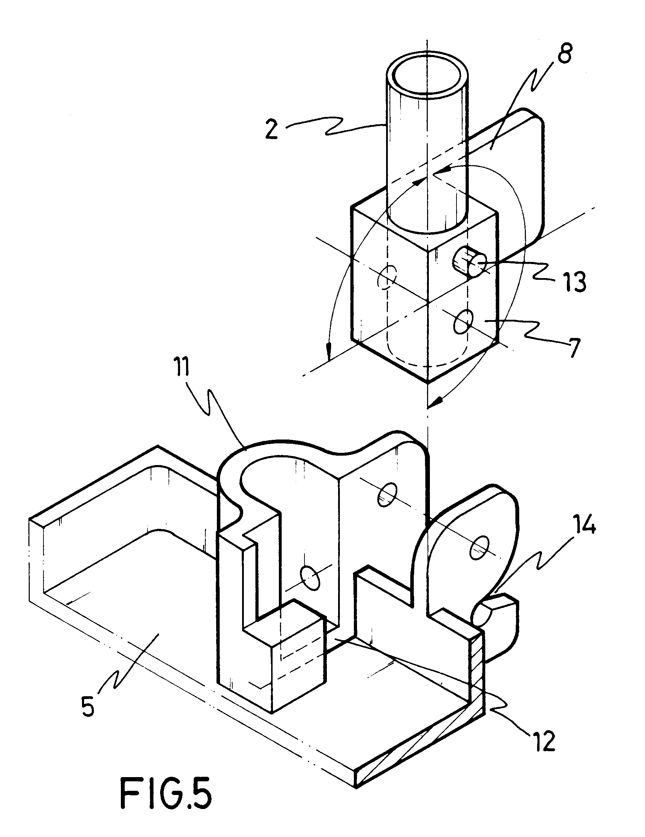

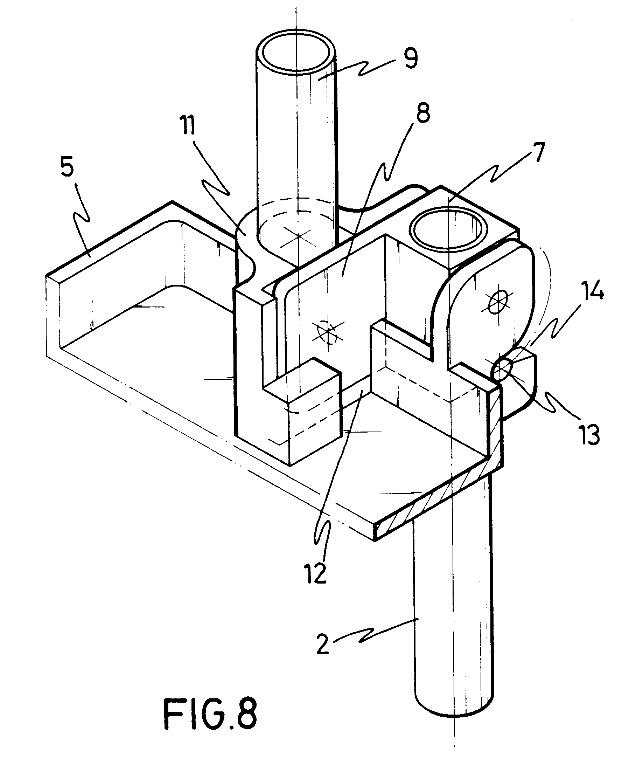

In the unfolding position (figures 5 and 8), the pivot 13 of the prismatic piece fits into the slot 14 of the housing, as retaining element for the assembly.

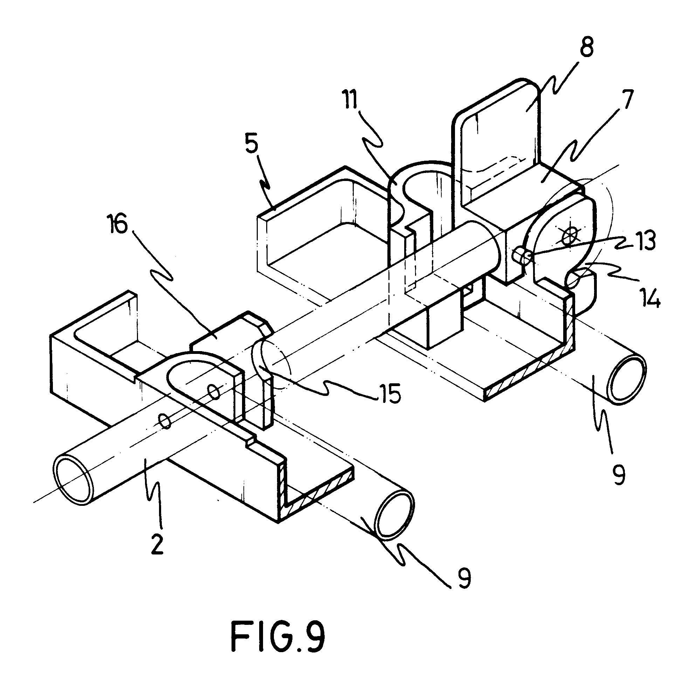

In the same folding position (figure 9), the frame 2 fits into the notch 15 of the piece 16.

By means of the herein described elements, the wheel frameworks can be automatically unfolded by merely displacing both frames for their extension.

It has been foreseen that the unfolded position of the frames can be maintained by means of retention elements situated either at the sleeves or in the housing that articulates the frames to the resistant plate of the bottom of the bag. In any case a solution tending to reinforce the retention system in the unfolded position will be advisable.

### DESCRIPTION OF A PREFERRED EMBODIMENT.

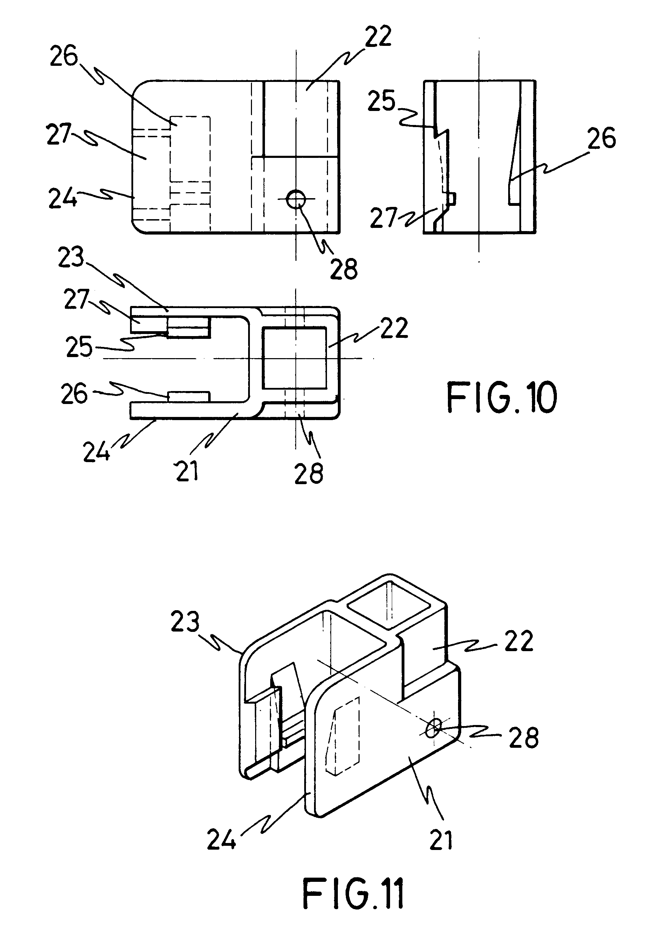

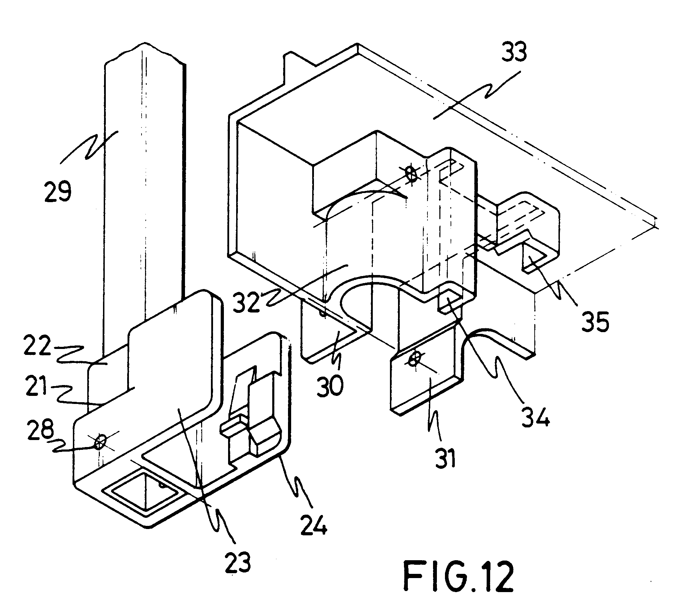

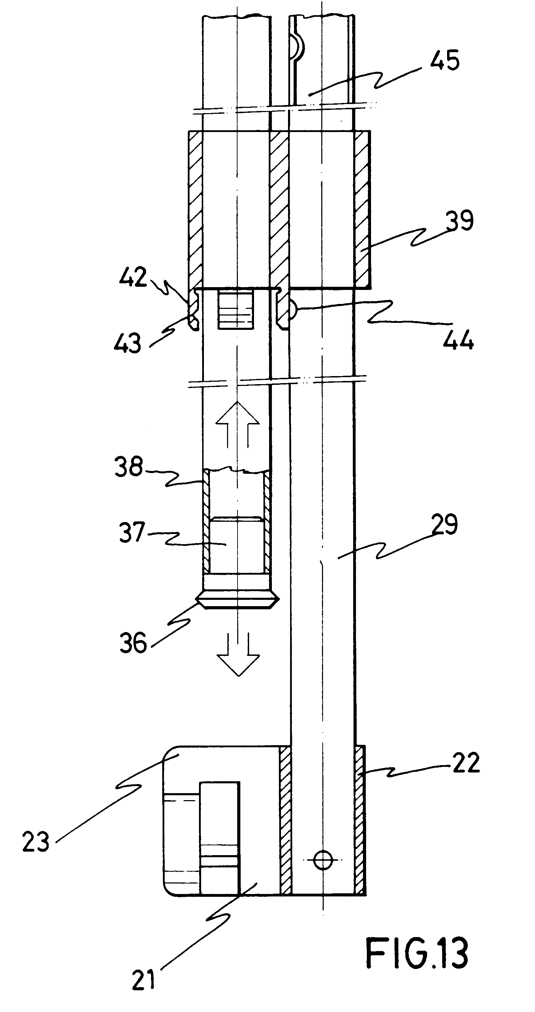

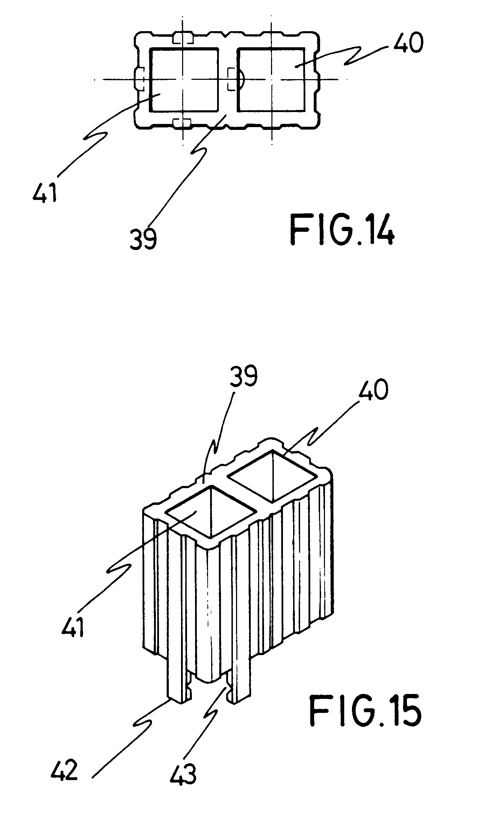

According to the most improved embodiment, as shown in figures 10 to 15, it is understood that the improvements provided by the invention are located in the housing articulated in one of the frames of the rigid base of the bag; in said rigid base and in the tubular socket that enables both seizing frameworks to slide in-between, and in the mechanism that fixes the positions of the frameworks and of the socket.

In accordance with this, said quadrangular prismatic piece 21 has a tubular extension 22. Two sides of the tubular extension are extended into parallel walls 23 and 24. Inside these walls, there are vertical opposing wedge-shaped embossings 25 and 26 and other quadrangular embossing 27, the base of which constitutes a stop. The anchoring axle, not represented, is made to pass through the drilling 28 that goes through the lower part of the quadrangular piece towards one of the seizing frameworks. The axle itself, mounted in the drilling 28, goes through the walls 30 and 31 of the housing 32 which is formed at an edge of the rigid base 33. The housing 32 forms two recesses 34 and 35, parallel to each other, for the passage of walls 23 and 24 of the quadrangular piece. The lug or wall 23 has a higher flexibility index, for which purpose it has a smaller thickness than the other wall 24. The projection inside the lug 23 is intended to constitute the engagement on the end of said wall in order to fix the unfolded position of the framework and of the bag, when it is displaced in its assembly sliding inside the paths 34 and 35 provided at the platform.

The projections 25 and 26 of the walls 23 and 24 have been conceived to retain the peripheral web 36 of the ferrule 37 whereinto the mobile frame 38 finishes.

A one-single-piece double socket 39 forms two paths. The first one 40 for the frame 29 and the second one 41 for the frame 38. Both frames move along said paths of the socket in a parallel position.

The path 41 has some extensions 42 of the lower ends of its walls and the transversal grooves 43 which fit the web 36 of the ferrule 37 for retaining the frames in the extended position are formed in said walls.

One of the extensions 42, just the corresponding one parallel to the frame 29, is provided with a semispherical embossing 44 that, in the extension position, fits the punching 45 of said frame.

It is inferred from the above description that the seizing framework, formed by two parallel frames, can be folded by sliding until the ferrule web fits the projections of the flexible wall of the quadrangular piece by which one of the frames is articulated to the rigid platform of the bag. Flexibility has been studied so that the ferrule can disengage itself with a slight pressure, but with no possibility of fortuitous uncoupling during handling.

It happens the same in the coupling of the ferrule between the lugs of the double sockets, wherein it is retained in the unfolded position, until a certain force is exerted for the uncoupling thereof.

With these characteristics, the folding and unfolding of the bag becomes simple and efficient.

## Claims

1. A FOLDABLE CART FOR SHOPPING,of those having a rigid base whereat frameworks carrying each one of the two wheels on which the bag is supported in unfolded position for its transport are arranged, said frameworks allowing the wheels to be folded underneath the rigid base that gives form to the bottom of the bag, whilst the seizing frameworks can be extended and folded by parallel sliding, in order to allow their extension for pulling the cart, or be folded in the form of a bag of reduced size for its hand transport, characterized in that one of the parallelly displacing frameworks is attached to the upper zone of the bag, pulling it for its extension and/or folding, whilst the other one is provided, close to its articulation axle over the resistant base of the bag, with some plates or lugs which on rotating go through a slot provided in said base, thereby falling into the wheel framework, making said wheels be unfolded and retained in this position.

2. A FOLDABLE CART FOR SHOPING,according to claim 1, characterized in that both parallel frameworks move along both parallel tubular sockets, joined to each other two by two, these sockets being provided with retaining elements for the ends of one of the frameworks in order to fix it in the unfolded position.

3. A FOLDABLE CART FOR SHOPPING,according to claims 1 and 2, characterized in that the resistant plate that gives form to the bottom of the bag is provided, at points opposed those of articulation of the seizing frameworks, with two plates with notches by which they fit under pressure onto said seizing frameworks when the assembly is folded so as to be converted into a bag of reduced size.

4. A FOLDABLE CART FOR SHOPPING,according to claim 1, characterized by providing the quadrangular piece of the lower ends of one of the seizing frameworks, with a second lug, parallel to the first one and having a higher flexibility index, having at its inner face a projection which, as it slides on assemblying on the wall of the path provided in the platform, constitutes an engagement on the end of said wall in order to fix the unfolded position of the framework and of the bag.

5. A FOLDABLE CART FOR SHOPPING,according to claim 4, characterized by providing the two lugs of the quadrangular piece with an embossing, both embossings facing each other in order to establish a passage in-between for a ferrule with which the mobile frame of the seizing framework is provided, said ferrule having a peripheral web which determines, in the insertion between the lugs of the quadrangular piece, the separation and disengagement thereof that allows the assembly to be folded.

6. A FOLDABLE CART FOR SHOPPING,according to claims 4 and 5, characterized in that the peripheral web of the ferrule is located, in the unfolded position of the assembly, between the lugs established as an extension of the double sockets which guide in-between the seizing frameworks, said lugs being provided, with that aim, with transversal notches.

7. A FOLDABLE CART FOR SHOPPING,according to claims 4, 5 and 6, characterized in that one of the lugs extending from the double sockets is provided at the outer face coinciding with the position of the opposing framework with a semispherically-shaped embossing by which it is coupled in the unfolded situation of the seizing framework, into a punching foreseen in said opposing framework, thereby fixing the position thereof.

## Patentansprüche

1. Zusammenklappbarer Wagen zum Einkaufen mit einer starren Grundfläche, an der Rahmen angebracht sind, von denen jeder im aufgeklappten Zustand eines von zwei Rädern zum Transport trägt, wobei die Rahmen zusammen mit den Rädern unter die starre Grundfläche einklappbar sind, die ihrerseits dem Boden des Einkaufsbeutels Halt gibt, während Halterahmenteile, parallel zueinander gleitend, auszieh- und zusammenschiebbar sind, um entweder zum Ziehen des Wagens ausgefahren zu werden oder um zum Transport von Hand ein Paket verminderter Größe zu bilden,
dadurch **gekennzeichnet,** daß eines der parallel zueinander verschiebbaren Halterahmenteile mit dem oberen Teil des Einkaufsbeutels verbunden ist, um an diesem Beutelteil zum Aufrichten oder zum Zusammenfalten zu ziehen, während der andere Halterahmenteil nahe seiner Gelenkachse und oberhalb der widerstandsfähigen Grundfläche mit mehreren Blechen oder Ansätzen versehen ist, die ihrerseits beim Verschwenken durch einen in der Grundfläche vorgesehenen Schlitz hindurchgehen und dabei die Räder entfalten und in dieser Stellung feststellen.

2. Zusammenklappbarer Wagen zum Einkaufen nach Anspruch 1, dadurch gekennzeichnet, daß beide parallelen Halterahmenteil in längs parallel zueinander angeordneten, rohrförmigen Hülsen verschiebbar sind, die zweierweise miteinander verbunden sind, wobei diese Hülsen mit Arretierungselementen für die Enden von einem der Halterahmenteile versehen sind, um das Halterahmenteil in seiner ausgefahrenen Stellung zu arretieren.

3. Zusammenklappbarer Wagen zum Einkaufen nach den Ansprüchen 1 und 2, dadurch gekennzeichnet, daß die widerstandsfähige Fläche oder Platte, die dem Boden des Einkaufsbeutels Halt gibt, an Punkten, die den Anlenkpunkten der Halterahmenteile gegenüberliegen, mit Platten versehen sind, die Kerben haben, mit deren Hilfe die Platten unter Druck dann auf die Halterahmenteile einwirken, wenn der Wagen zusammengeklappt und in ein Paket verminderter Größe verwandelt worden ist.

4. Zusammenklappbarer Wagen zum Einkaufen nach Anspruch 1, dadurch gekennzeichnet, daß die unteren Enden eines der Halterahmenteile mit rechtwinkligen Stücken versehen sind, die einen zweiten, parallel zum ersten verlaufenden Ansatz haben, der jedoch einen höheren Elastizitäts-Index hat und an dessen Innenfläche ein Vorsprung ist, der dann, wenn er beim Zusammenschieben an der Wand des in der Grundplattenform vorgesehenen Weges entlanggleitet, in Eingriff mit dem Ende dieser Wand kommt, um die aufgeklappte Stellung des Rahmens und des Beutels festzulegen.

5. Zusammenklappbarer Wagen zum Einkaufen nach Anspruch 4, dadurch gekennzeichnet, daß die beiden Tragarme des rechtwinkligen Teiles mit je einem vorstehenden Teil versehen sind, die aufeinander zu gerichtet sind, um zwischen sich einen Ringbeschlag aufzunehmen, mit dem der bewegbare Rahmenteil des Rahmens versehen ist, wobei der Ringbeschlag einen Umfangsrand hat, der beim Einschieben zwischen die vorstehenden Teile des rechtwinkligen Teiles deren Trennung und ein Lösen davon bestimmt, wodurch ermöglicht wird, daß der Wagen zusammengeklappt wird.

6. Zusammenklappbarer Wagen zum Einkaufen nach den Ansprüchen 4 und 5, dadurch gekennzeichnet, daß der Umfangsrand des Ringbeschlages in der aufgeklappten Stellung des Wagens zwischen den Tragarmen sitzt, die eine Verlängerung der Doppelhülse bilden, die ihrerseits in sich die Rahmenteile führen kann, wobei die Tragarme zu diesem Zweck mit quer verlaufenden Ausnehmungen versehen sind.

7. Zusammenklappbarer Wagen zum Einkaufen nach den Ansprüchen 4, 5 und 6, dadurch gekennzeichnet, daß einer der Tragarme, die sich von der Doppelhülse aus erstrecken, an derejenigen Außenfläche vorgesehen ist, die auf das gegenüberliegende Rahmenteil zu gerichtet ist, mit einem halbkugelförmigen Vorsprung versehen ist, mit dessen Hilfe er im aufgeklappten Zustand des Wagens in eine Einprägung im gegenüberliegenden Rahmenteil eingreifen kann, um auf diese Weise dessen Stellung im aufgeklappten Zustand festzulegen.

## Revendications

1. Chariot à provisions pliable, du type comportant une base rigide à laquelle sont fixés des cadres portant chacune des deux roues qui portent le sac en position dépliée en vue de son transport, lesdits cadres permettant le pliage des roues au-dessous de la base rigide qui donne une forme à la partie du fond du sac, alors que les cadres formant des prises peuvent être mis en extension ou pliés par glissement parallèle, leur extension permettant de tirer le chariot, et leur pliage permettant de constituer un sac de dimensions réduites en vue de son transport à la main, caractérisé en ce que l'un des cadres qui se déplace parallèlement ext fixé à la zone supérieure du sac, pour le tirer en vue de le déployer et/ou de le plier, alors que l'autre comporte, au voisinage de l'axe de son articulation située au-dessus de la base rigide du sac, des plaques ou pattes qui en tournant s'engagent à travers une encoche ménagée dans ladite base, et tombe ainsi dans le châssis des roues, dépliant lesdites roues et les maintenant dans cette position.

2. Chariot à provisions pliable selon la revendication 1, caractérisé en ce que l'un et l'autre des cadres parallèles se déplacent chacun le long de deux manchons tubulaires parallèles, joints l'un à l'autre deux à deux, ces manchons comportant des éléments de retenue, destinés aux extrémités de l'un des cadres afin de l'immobiliser en position dépliée.

3. Chariot à provisions pliable selon les revendications 1 et 2, caractérisé en ce que la plaque résistante qui donne une forme à la partie du fond de sac comporte, en des points opposés à ceux de l'articulation des cadres formant des prises, deux plaques dans lesquelles sont ménagées des rainures qui leur permettent de s'ajuster sous pression sur lesdits cadres formant des prises lorsque l'assemblage est plié, de manière à transformer ce dernier en un sac de dimensions réduites.

4. Chariot à provisions pliable selon la revendication 1, caractérisé en ce que la pièce quadrangulaire des extrémités inférieures de l'un des cadres formant des prises comporte une deuxième patte parallèle à la première, ayant un coefficient de flexibilité plus élevé, et comportant sur sa face intérieure une saillie qui lorsqu'elle coulisse, en cours d'assemblage, sur la paroi du chemin de glissement prévu dans la plate- forme, constitue un engagement sur l'extrémité de ladite paroi afin de maintenir la position dépliée du cadre et du sac.

5. Chariot à provisions pliable selon la revendication 4, caractérisé en ce que les deux pattes de la pièce quadrangulaire comportent respectivement un bossage, l'un et l'autre de ces bossages se faisant face afin d'établir entre eux un passage pour un embout dont est muni le châssis mobile du cadre formant des prises, ledit embout comportant une collerette périphérique qui détermine, lorsqu'elle est insérée entre les pattes de la pièce quadrangulaire, la séparation et de désengagement de celle-ci qui permettent le pliage de l'assemblage.

6. Chariot à provisions pliable selon les revendications 4 et 5, caractérisé en ce que la collerette périphérique de l'embout est logée, en position dépliée de l'assemblage, entre les pattes constituées comme une extension des manchons doubles qui guident entre eux les cadres formant des prises, lesdites pattes comportant à cette fin des fentes transversales.

7. Chariot à provisions pliable selon les revendications 4, 5 et 6, caractérisé en ce que l'une des pattes qui s'étendent depuis les manchons doubles comporte, sur la face extérieure, en coïncidence avec la position du cadre opposé, un bossage semi-sphérique au moyen duquel elle est en prise, à l'état déplié du cadre formant des prises, avec une découpe poinçonnée ménagée dans ledit cadre opposé, fixant ainsi la position de ce dernier.
